# EUROPÄISCHE PATENTSCHRIFT

(11) **EP 0 751 033 B1**
(45) Veröffentlichungstag und Bekanntmachung des Hinweises auf die Patenterteilung: **07.02.2001**
(21) Anmeldenummer: 96110347.0
(22) Anmeldetag: 27.06.1996
(51) Int. Cl.: B60N 2/28

(54) **Autokindersitz**
Children's seat for vehicles
Siège d'enfants pour véhicules

(30) Priorität: 30.06.1995 DE 29510641 U; 30.06.1995 DE 29510642 U
(43) Veröffentlichungstag der Anmeldung: 02.01.1997
(73) Patentinhaber: Schräder, Margarete, D-95352 Marktleugast (DE)
(72) Erfinder: Schräder, Margarete, D-95352 Marktleugast (DE)
(74) Vertreter: Tergau, Enno, Dipl.-Ing.

(56) Entgegenhaltungen:
- EP-A- 0 326 265
- WO-A-91/03388
- DE-A- 2 843 305
- DE-A- 3 422 340
- DE-A- 3 536 206
- DE-A- 4 328 625
- DE-A- 4 329 755
- DE-U- 7 907 643
- US-A- 4 603 903

## Beschreibung

Die Erfindung betrifft einen Autokindersitz, welcher für ein Zusammenwirken mit dem Rückhaltesystem eines Automobils, also mit Diagonalgurten oder üblichen Dreipunktgurten von Automobilen bestimmt ist.

Es ist ein Autokindersitz bekannt, welcher an einer Seite mit einer höhenverstellbaren Gurtführung für einen Diagonalgurt oder für den Diagonalteil eines Dreipunktgurtes versehen ist. Mit dieser Gurtführung ist es möglich, den Verlauf des Diagonalgurtes - nachstehend auch allgemein "Diagonalteil" genannt - der Körpergröße des Kindes anzupassen, welches den Sitz benutzt. Bei einer Ausführungsform weist der Sitz mehrere in ihrer Höhe versetzte, an der Vorderkante der Sitzlehnenseite angeordnete Hülsen bzw. Schlaufen auf, durch die in ausgewählt unterschiedlichen Höhenpositionen der Diagonalteil geführt ist. Bei einer anderen Konstruktion ist der Diagonalteil nicht längsverschiebbar in den höhenverstellbaren Führungshülsen geklemmt. Dabei ist die Klemmhülse in unterschiedlichen Höhenpositionen an einer seitlichen Vorderkante der Sitzlehne fixierbar.

Bei einem aus der gattungsbildenden EP 0 326 265 B1 vorbekannten Autokindersitz ist der Diagonalgurt an einer höhenverstellbaren Kopfstütze laufend geführt. Dadurch wirkt der von der Aufrollautomatik eines Automatikgurtes ausgehende Aufrolldruck permanent auf das einsitzende Kind ein.

Der Erfindung liegt die Aufgabe zugrunde, die Führung des Diagonalgurtes an der Kopfstütze weiterzuentwickeln. Diese Aufgabe wird durch Anspruch 1 gelöst. Durch die Klemmeinrichtung lässt sich ein vom Diagonalteil des Gurtes auf den Körper des einsitzenden Kindes etwa permanent ausgeübter Rückhaltedruck besonders gut dosiert einstellen. Diese Adaption des Diagonalgurtes an das einsitzende Kind lässt sich bei in Öffnungsstellung ausgeschwenktem Klemmschenkel besonders einfach und komfortabel bewerkstelligen. Dadurch ist es möglich, den Hals des Kindes von einem unmittelbaren Kontakt mit dem Diagonalgurt weitgehend freizuhalten.

Zweckmäßig ist an beiden seitlichen Enden der Kopfstütze je eine Gurtführung vorgesehen. Dies entspricht der Anforderung, dass der Sitz in gleicher Weise auf der linken oder rechten Seite des Automobils positionierbar sein soll je nachdem, ob der Diagonalteil des Gurtes links oder rechts verläuft.

Zweckmäßig sind die Seitenenden der Kopfstütze nach Art der "Ohren" eines Ohrensessels in Blickrichtung des Kinds nach vorne geführt. Dadurch bieten sie zunächst einen Seitenhalt für den Kopf. Außerdem ist es dadurch möglich, die Gurtführung in eine etwa vertikal ausgerichtete Ebene zu verlagern, die in Sitz- oder Fahrrichtung vor dem Kinderhals liegt. Dadurch beschränkt der geführte Diagonalteil nicht die seitliche Beweglichkeit des Kinderkopfes. Weierhin wird dadurch die anderweitig existente Strangulierungsgefahr vermieden und das untere Ende des Diagonalteiles wird in konstanter Höhe im Beckenbereich des einsitzenden Kindes gehalten.

Die Ausrichtung der Seitenenden der Kopfstützen nach Art der "Ohren" eines Ohrensessels nach vorne in eine etwa in Fahrrichtung weisende Position (insbesondere gemäß Anspruch 3 der Erfindung) hat den weiteren Vorteil einer einfacheren Bedienbarkeit der Führungsösen. Diese Führungsösen lassen sich in einer etwa in Fahrrichtung verlaufenden Schwenkebene öffnen. Zweckmäßig sind es Klapp-Ösen, die in Öffnungsstellung ein einfaches Einlegen des Diagonalteils des Gurtes ermöglichen und in Schließstellung den Diagonalteil fest gegen das Seitenende der Kopfstütze beaufschlagen, also praktisch einklemmen.

Zweckmäßig verläuft die Schwenkebene der Klappenden der Gurtführung in Fahrrichtung und sie ist im Wesentlichen vertikal ausgerichtet. Die Schwenkachse liegt am unteren Ende des Schwenkteils bzw. des Seitenauslegers der Kopfstütze. Beim Aufschwenken des Schwenkendes in seine Öffnungsstellung bildet dieses eine etwa horizontale Auflage für den Diagonalteil und ermöglicht damit auch leicht eine in Gurtlängsrichtung verstellbare Positionierung des Gurtes gegenüber dem Kind. Erst wenn die gewünschte, in dieser Weise einfach und unbehindert einstellbare Sollposition des Diagonalteils eingestellt ist, erfolgt die Klemmfixierung dieser Sollposition.

Bei einem Autokindersitz der vorgenannten Art erfolgt im Falle eines Aufpralls die Beaufschlagung des Kindskörpers durch den Diagonalgurt unmittelbar und das empfindet ein Teil der Verkehrskreise als nachteilig. Insbesondere der Kopf- und der Halsbereich des Kindes nehmen nämlich keine bestimmte, genau vorhersehbare Position gegenüber dem Diagonalteil des Rückhaltesystems ein und bei einem Unfall kann es deswegen zu einer ungünstigen Halsbelastung kommen. Um solche Fallsituationen zu vermeiden, sind sogenannte Prallkissen bekannt. Sie nehmen eine größere Vorverlagerung des Kopfes und des Halsbereiches des Kindes bei einem Unfall in Kauf. Das Prallkissen verfügt über eine abgefederte Pralloberfläche, auf die der Körper und das Gesicht des Kindes aufschlagen, die dabei behutsam abgebremst werden. Dieser Abbremseffekt läßt sich in einfacher Weise durch konstruktive Ausbildung des Prallkissens sicherstellen. Diese gewünschte Funktion des Prallkissens ist aber nur dann sichergestellt, wenn es eine genau vorbestimmte Sollposition gegenüber dem Sitz einnimmt und das ist bei bekannten Autokindersitzen nicht optimal sichergestellt. Das Prallkissen ist nämlich nur auf den Sitzteil des Autokindersitzes aufgesetzt, ohne dass eine genaue, seitliche Positionierung gewährleistet wird. In Aufsetzstellung wird das Prallkissen nämlich nur durch das Rückhaltesytem des Fahrzeuges, z.B. durch dessen Beckenteil oder durch einen Beckengurt (auf der Mitte des Fahrzeugrücksitzes), gehalten. Bei Vorhandensein eines Diagonalteils im fahrzeugeigenen Rückhaltesystem ist dieser Diagonalteil am Sitz auch so geführt, dass er ebenfalls zur Beaufschlagung des Prallkissens im Sinne von dessen Fixierung gegenüber dem Sitzteil beiträgt.

Der Erfindung liegt auch die weitere Aufgabe zugrunde, einen Kinderfahrzeugsitz der eingangs genannten Art so auszugestalten, dass er mit einem Prallkissen in einer Weise kombinierbar ist, dass das Prallkissen immer eine bestimmte Sollposition gegenüber dem Sitz bzw. dessen Sitzteil einnimmt und in dieser Position durch das fahrzeugeigene Rückhaltesystem fixiert ist.

Die Lösung dieser weiteren Aufgabe ist Gegenstand des abhängigen Anspruches 8. Zweckmäßig ist die Ausgestaltung so getroffen, dass das Prallkissen entgegen der Blickrichtung des Kindes bzw. des Fahrrichtung des Fahrzeuges zwischen die damit gabelartig wirksamen Armauflagen eingeschoben ist. Von besonderer Zweckmäßigkeit ist das Merkmal, dass das Prallkissen bzw. der den Energieabsorber des Prallkissens tragende Prallkörper mit seinem Gewicht unmittelbar auf dem Sitzteil, genauer gesagt auf den die Beine des Kindes in Sitzstellung flankierenden Seitenteilen des Sitzteiles aufliegt und mit seinen Seitenflanken zwischen die gabelartig wirksamen Armauflagen des Sitzes eingeschoben ist, wobei die Abmessungen zweckmäßig so getroffen sind, dass eine schwalbenschwanzartige Wirksamkeit auch dann ein Abheben des Prallkissens aus seiner Sollposition verhindert, wenn das fahrzeugeigene Rückhaltesystem nicht aktiviert ist.

Das Prallkissen wird in seine Sollstellung von vorne in Richtung auf die Rücklehne des Sitzes eingeschoben. In Einschiebe-Endstellung ist zweckmäßig automatisch das Prallkissen schon gegenüber dem Sitz fixiert, so dass selbst bei einer gewissen Unachtsamkeit beim Anlegen des Rückhaltesystems kein seitliches Verrükken des Prallkissens gegenüber dem Sitz zu besorgen ist. Es wird in dieser Position das Rückhaltesystem angelegt. Bei einem Unfall ist gewährleistet, dass sich das Prallkissen in der Anlege-Sollposition befindet und nicht etwa z.B. durch Unruhe des einsitzenden Kindes aus seiner Sollposition seitlich verrückt hat.

Die Erfindung wird anhand der Figuren beispielsweise erläutert. Es zeigen:
- Fig. 1: in Explosionsdarstellung die Teile eines Autokindersitzes, wobei es für diese Erfindung unwesentlich ist, dass Sitz- und Rückenteil des Sitzes hier durch separate, ineinandersteckbare Teile gebildet sind,
- Fig. 2: eine Darstellung des Sitzes mit in seiner Sollposition geklemmtem Diagonalteil des Gurtes und - teilweise gestrichelt - angedeutet des Prinzips der Höhenverstellbarkeit des Rückhaltesystems.
- Fig. 3: eine Variante des Autokindersitzes mit zusätzlich einem Prallkissen,
- Fig. 4 und 5: eine in Pfeilrichtung IV von Fig. 1 wirksame Seitenansicht des Sitzteils mit unterschiedlichen Höhenverstelleinrichtungen gegenüber dem Sitzteil 1 oder - bei davon losgelöster Verwendung des Sitzteils - z.B. gegenüber der Sitzfläche eines Automobilsitzes.

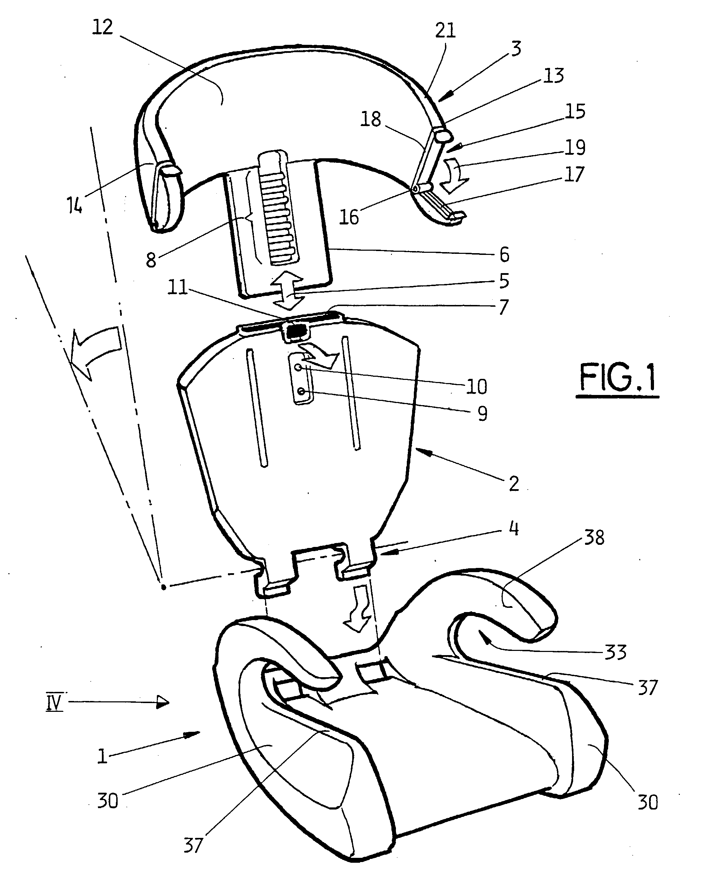

Der Kindersitz besteht im Wesentlichen aus dem Sitzteil 1, dem Rückenteil 2 und der Kopfstütze 3. Sitzteil 1 und Rückenteil 2 können - wie bereits vorstehend ausgeführt - einteilig ausgeführt sein. Im Falle von Fig. 1 sind sie jeweils als gesonderte Teile gebildet, die durch eine für die vorliegende Erfindung bedeutungslose Steckverbindung 4 zu einer Einheit ineinandersteckbar sind.

Weiterhin ist eine separate Kopfstütze 3 mit in Pfeilrichtung 5 höhenverstellbarer Führung am Sitz, in der Regel an dessen Rückenteil 2, vorhanden. Die Höhenverstellbarkeit ist kombiniert mit einem Rastgesperre. Dieses Rastgesperre lässt eine Fixierung der Kopfstütze 3 in wahlweisen Höhenpositionen gegenüber dem Sitz bzw. der Rückenlehne 2 zu.

Im Falle des vorliegenden Ausführungsbeispiels sind sowohl das Rückenteil 2 als auch die Kopfstütze 3 aus Kunststoff gefertigte Blasteile. Das Rückenteil 2 enthält eine in Pfeilrichtung 5 wirksame Führung - im Wesentlichen eine Vertikalführung -, innerhalb derer die Kopfstütze 3 mit einem einstückig angeformten Vertikalausleger 6 geführt ist. Der Zugang zur als Mutterteil wirksamen Längsführung im Rükkenteil 2 erfolgt durch den Einführungsschlitz 7, in den der Vertikalausleger 6 nach Art eines Vaterteils einführbar ist.

Der Vertikalausleger 6 der Kopfstütze 3 ist mit einer in Einsteckrichtung 5 nach Art einer Zahnschiene wirksamen Rasteinheit 8 versehen. Die Rasteinheit 8 ist einstückig in die Vorder- und Rückwand des Vertikalauslegers 6 der Kopfstütze 3 eingeprägt. Sie ist beim Blasvorgang einstückig mit der Kopfstütze 3 hergestellt. Die Rasteinheit 8 bildet auf der der Betrachtungsebene von Fig. 1 abgewandten Rückseite des Vertikalauslegers in Pfeilrichtung 5 gleichmäßig versetzte Rastvorsprünge, in welche das Rastende 9 einer am Rückenteil 2 fixierten Blattfeder 10 eingreift. Die Blattfeder 10 ist so vorgespannt, dass ihr Rastende 9 sich in Ruhestellung immer im Eingriff mit einer Rastmulde (nicht dargestellt) der Rasteinheit 8 befindet, und zwar in unterschiedlich wählbaren Höhenpositionen.

Die Höhenverstellung wird nun dadurch möglich, dass die Blattfeder aus ihrer Ruhestellung im Wesentlichen in einer zur Darstellungsebene senkrechten Druckrichtung ausgelenkt wird. Dazu dient die mit der Blattfeder 10 verbundene Drucktaste 11. Die Drucktaste 11 wird gewissermaßen in die Rückenlehne hineingedrückt und dadurch entrastet das Rastende aus seiner Rastverbindung mit der Rasteinheit 8 der Kopfstütze 3.

Nun zur erfindungsfunktionellen Ausgestaltung der Kopfstütze 3: Sie weist beim vorliegenden Ausführungsbeispiel - von vorn gesehen - die Form eines T auf, wobei der Vertikalausleger 6 der Vertikalschenkel des T ist. Wichtig ist, dass sich der Kopfteil 12 mit seinen Seitenenden 13,14 bis in den Seitenbereich des Rückenteils 2 erstreckt, um dem Kopf des einsitzenden Kindes eine ausreichende Seitenbeweglichkeit zu geben und das Diagonalteil 20 des Gurtes richtig zu positionieren. An mindestens einem der beiden Seitenenden 13,14 befindet sich ganz generell die Führung des in Fig. 1 nicht dargestellten Diagonalteils 20 des Rückhaltesystems bzw. Gurtes.

Um nun eine besonders günstige und den erwähnten Strangulierungseffekt sicher vermeidende Gurtführung zu gewährleisten, sind die Seitenenden 13,14 des Kopfteils 12 gegenüber dessen Anlageebene für den Hinterkopf des Kindes in Blick- bzw. Fahrrichtung nach vorne geführt. Dadurch befindet sich die Gurtführung vor dem Halsbereich des Kindes. Am einfachsten lässt sich dieses Merkmal bei einer als Kunststoff-Blasteil einstückig ausgebildeten Kopfstütze 3 dadurch verwirklichen, dass das Kopfteil 12 in Draufsicht in Vertikalrichtung auf den Kindersitz eine U-Form aufweist, wobei sich die Gurtführungen 15 an den beiden Freienden der Vertikalschenkel des U befinden.

Beim dargestellten Ausführungsbeispiel sind die Gurtführungen 15 durch ein Beschlagteil gebildet, welches im Wesentlichen aus zwei durch eine Schwenkachse 16 miteinander verbundenen Klemmschenkeln 17,18 besteht. Der Klemmschenkel 18 ist dabei ein Festschenkel, welcher fest mit dem Kopfteil 12 der Kopfstütze 3 verbunden, z.B. verschraubt ist. Der andere Klemmschenkel ist der Schwenkschenkel 17, welcher um die Schwenkachse 16 nach Art eines Scharnierteils in Schwenkrichtung 19 verschwenkbar ist. Zweckmäßig befindet sich die Scharnierachse 16 am unteren Ende der beiden Schenkel 17,18, so dass in der in Fig. 1 (rechte Seite), dargestellten Öffnungsstellung der Gurtführung der Schwenkschenkel 17 eine etwa horizontale Auflage für den nicht dargestellten Diagonalteil 20 des Gurtes bildet. In dieser Öffnungsstellung lässt sich das Diagonalteil 20 in einfacher Weise wunschgemäß gegenüber dem Kopfteil 12 positionieren. Ist diese Positionierung erreicht, so wird die Position durch ein entgegen der Schwenkrichtung 19 erfolgendes Zuschwenken des Schwenkschenkels 17 fixiert. In dieser Fixierstellung ist der Diagonalteil zwischen den Schenkeln 17,18 geklemmt. Diese Klemmung lässt sich in einfacher, hier nicht näher beschriebener Weise wunschgemäß lösen. Die konstruktive Ausbildung eines solchen Beschlagteils entspricht dem Können eines Fachmanns.

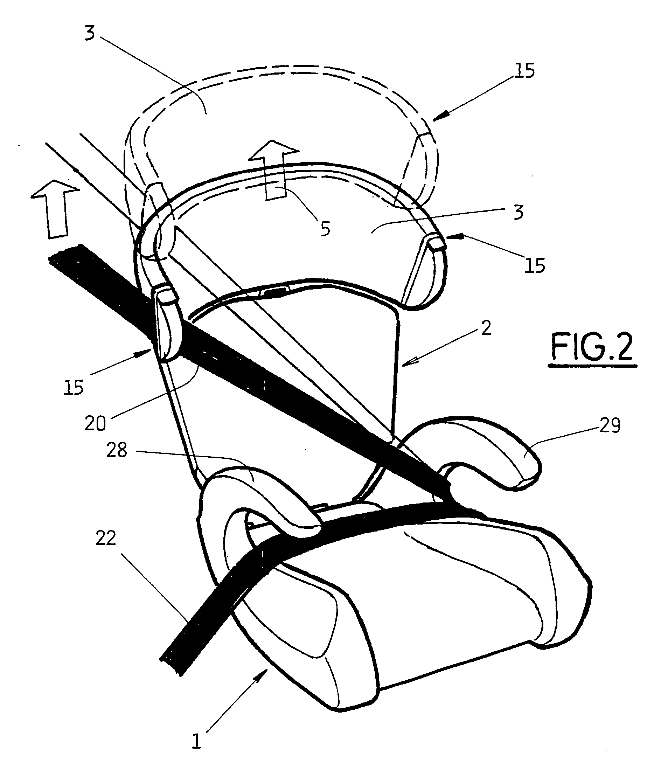

In Fig. 2 ist dargestellt, wie in einfacher Weise die Führung des Diagonalteils 20 des dort dargestellten Rückhaltesystems durch die Gurtführung 15 verstellt werden kann: Die Kopfstütze 3 ist gegenüber dem Rückenteil 2 in Pfeilrichtung 5 verstellbar und in beliebigen Höhenstellungen fixierbar. In der gewünschten Höhenstellung der Kopfstütze 3 wird die Gurtführung 15 geöffnet. Der Diagonalteil 20 des Gurtes wird in der beschriebenen Weise eingelegt und die Gurtführung 15 wird dann zur Fixierung des Rückhaltesystemes geschlossen.

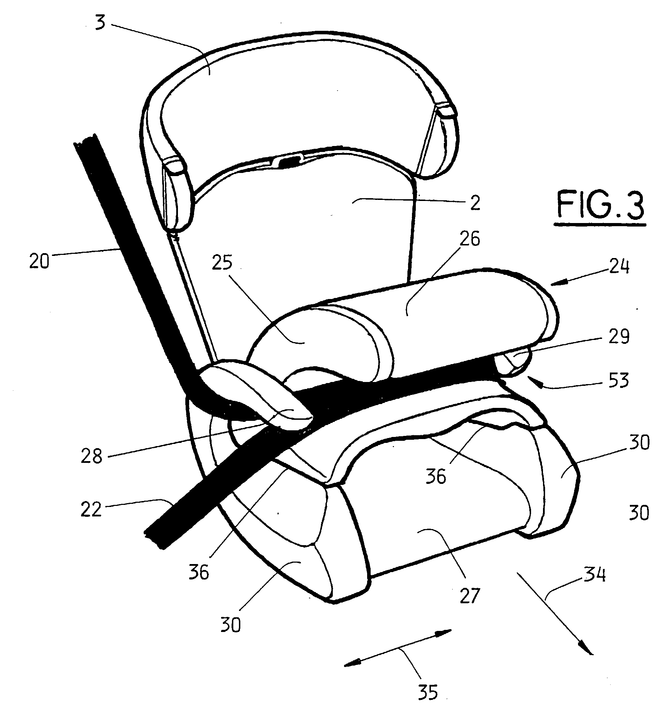

Bei der in Fig. 3 dargestellten Variante ist als Rückhalteelement ein Prallkissen 24 vorgesehen. Dieses ist sowohl vom Diagonalteil 20 als auch vom Beckenteil 22 des Rückhaltesystems gehalten. Beckenteil 22 und Diagonalteil 20 sind in Fig. 3 in ihrer Rückhaltestellung dargestellt.

Das Prallkissen 24 enthält einen im Wesentlichen starren Prallkörper 25 als Träger des im Wesentlichen die dem Kind zugewandte Oberfläche bildenden Absorbers 26. Der Prallkörper 25 ist ein formgeblasenes Kunststoffteil. Wegen seiner komplizierten, zur Führung des Rückhaltesystems vorne deutlich ausgekehlten (Auskehlung 53) Querschnittsform kann auch eine zweiteilige Ausbildung vorgesehen sein.

Von Bedeutung sind die beiden die Sitzfläche 27 beidseitig flankierenden Armlehnen 28,29 als obere, etwa horizontal verlaufene Begrenzung der Seitenkanten 30 des Sitzes. Zwischen den Seitenkanten 30 und den Armlehnen 28,29 befindet sich eine deutliche, nach vorne offene Auskehlung 33 zur Führung des Rückhaltesystems bzw. seines Diagonalteils 20 und seines Beckenteils 22. Von Bedeutung ist die exakte Positionierung des Prallkörpers 25 gegenüber dem Sitzteil 1 sowohl in Fahrrichtung 34 als auch in Querrichtung 35 dazu.

Der Prallkörper 25 liegt mit seinen beiden seitlichen Unterkanten 36 auf den Oberkanten 37 der Seitenkanten 30 auf. Die beiden Seitenkanten des Prallkissens 24 stoßen an die Armlehnen 28,29 an. Dadurch ist das Prallkissen 24 in Querrichtung 35 unverrückbar zwischen den Armlehnen 28,29 positioniert, wenn es sich in seiner Einschiebestellung befindet, die entgegengesetzt zur Fahrrichtung 34 wirksam ist.

Die Anlagebereiche des Prallkissens 24 an den Innenflanken 38 der Armlehnen 28,29 sind zweckmäßig so figuriert, dass sie nach Art etwa einer sich nach unten öffnenden Schwalbenschwanzverbindung wirksam sind und gewissermaßen das Prallkissen 24 mit seinen Unterkanten 36 von oben in fester Auflage auf den Oberkanten 37 der Seitenkanten 30 halten.

Die Aktivierung des unter Einschluss des Prallkissens wirksamen Rückhaltesystems wird wie folgt vollzogen: Bei inaktivem Rückhaltesystem und im Fahrzeug einsitzendem Kind wird das Prallkissen 24 von vorne entgegen der Fahrrichtung 34 in seine Sollposition eingeschoben, in der es durch die Armlehnen 28,29 seitlich eingefasst, also positioniert ist. Ist das Kind größer, so wird das Prallkissen 24 nicht so weit entgegen der Fahrrichtung 34 eingeschoben. Trotzdem ist die von den Armlehnen 28,29 ausgehende Positionierwirkung voll aufrecht erhalten, und zwar zumindest in Querrichtung 35, jedoch auch in der schwalbenschwanzartigen Wirksamkeit nach unten gegenüber den Oberseiten 17 der Seitenkanten 12.

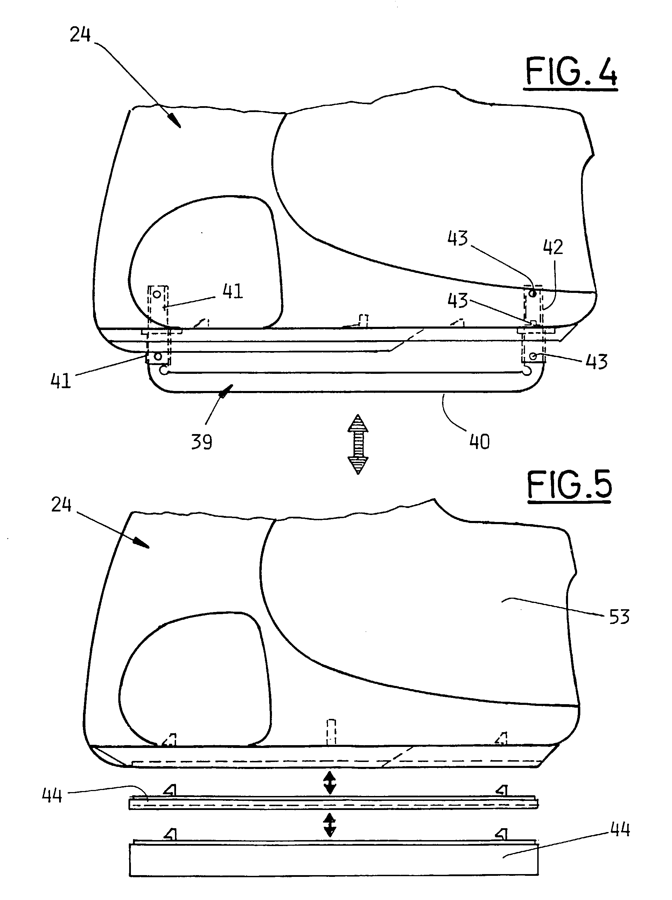

Bei der Ausführungsform des Prallkissens 24 nach Fig. 4 und 5 ist eine Höhenverstelleinrichtung vorgesehen, mit welcher der Abstand des Prallkissens 24 gegenüber dem Sitzteil 1 oder gegenüber der Sitzfläche eines Autositzes einstellbar ist. Bei der Ausführungsform gemäß Fig. 4 besteht diese Höhenverstelleinrichtung aus einem U-förmigen Bügel 39. Das Joch 40 des U-förmigen Bügels bildet eine Auflagekante. Die U-Schenkel 41,42 sind in Steckhülsen des Prallkissens 24 längsverschiebbar und in unterschiedlichen Verschiebestellungen mittels eines Federrastgesperres 43 innerhalb einer Steckhülse 44 verrastbar. Dadurch lassen sich einfach unterschiedliche Höhenstellungen des Prallkissens 24 einstellen. Im Wesentlichen wird das Prallkissen 24 jedoch vom Rückhaltesystem aus Diagonalgurt 20 und Beckengurt 22 gehalten.

Bei der Ausführungsform gemäß Fig. 5 sind mehrere zu den Unterkanten 36 der Seitenenden des Prallkissens 24 etwa parallele Distanzleisten 44 vorgesehen, die auf die Unterkante 36 aufschnappbar bzw. aufklipsbar sind. Die Distanzleisten 44 können auch eine unterschiedliche Dicke und damit höhenmäßige Wirksamkeit aufweisen.

### Bezugszeichenliste

- 1: Sitzkissen
- 2: Rückenteil
- 3: Kopfstütze
- 4: Steckverbindung
- 5: Pfeilrichtung
- 6: Vertikalausleger
- 7: Einführungsschlitz
- 8: Rasteinheit
- 9: Rastende
- 10: Blattfeder
- 11: Drucktaste
- 12: Kopfteil
- 13: Seitenenden
- 14: Seitenenden
- 15: Gurtführungen
- 16: Schwenkachse
- 17: Klemmschenkel
- 18: Klemmschenkel
- 19: Schwenkrichtung
- 20: Diagonalteil
- 21: Oberkante
- 22: Beckenteil
- 24: Prallkissen
- 25: Absorber
- 28: Armlehne
- 29: Armlehne
- 30: Seitenkante
- 33: Auskehlung
- 34: Fahrrichtung
- 35: Querrichtung
- 36: Unterkante
- 37: Oberkante
- 38: Innenflanke
- 39: Bügel
- 40: U-Joch
- 41: U-Schenkel
- 42: U-Schenkel
- 43: Federrastgesperre
- 44: Distanzleiste
- 53: Auskehlung

## Patentansprüche

1. Autokindersitz zur Fixierung auf einem Kraftfahrzeugsitz durch ein fahrzeugeigenes, einen Diagonalgurt enthaltendes Rückhaltesystem
- mit einem Sitzgestell mit Sitzteil (1), Rückenteil (2) und mit das Sitzteil (1) flankierenden Armlehnen (26,28) sowie
- mit einer im Rückenteil (2) höhenverstellbar geführten Kopfstütze (3) und einer an der Kopfstütze (3) seitlich oberhalb des Sitzteils (1) angeordneten Führung (15) für den Diagonalgurt (20),
dadurch gekennzeichnet,
dass die Gurtführung (15) für den Diagonalgurt (20) an mindestens einem Seitenende (13,14) der Kopfstütze (3) eine die relative Verschiebbarkeit des Gurtes (20) aufhebende Klemmeinrichtung mit einem Klemmschenkel (17) enthält, der aus seiner Klemmstellung in eine eine Auflage für den Diagonalgurt (20) bildende Öffnungsstellung schwenkbar ist.

2. Autokindersitz nach Anspruch 1,
dadurch gekennzeichnet,
dass sich die Kopfstütze (3) mit ihren Seitenenden (13,14) bis in die Seitenbereiche oberhalb des Rückenteils (2) hinein erstreckt und an den Seitenenden (13,14) die Klemmeinrichtung trägt.

3. Autokindersitz nach Anspruch 2,
dadurch gekennzeichnet,
dass die Seitenenden (13,14) der Kopfstütze (3) als Seitenbegrenzungen nach Art etwa der Ohren eines Ohrensessels zur Sitzvorderseite hin vor der als Anlagefläche für den Hinterkopf des Kindes dienenden Wirkfläche des Kopfteils (12) der Kopfstütze (3) liegen.

4. Autokindersitz nach einem der Ansprüche 1 bis 3,
dadurch gekennzeichnet,
dass der Klemmschenkel (17) um eine etwa horizontale Achse (16) schwenkbar an den Seitenbegrenzungen der Kopfstütze (3) angeordnet ist.

5. Autokindersitz nach Anspruch 4,
dadurch gekennzeichnet,
dass der Klemmschenkel (17) die Vorderkante eines Seitenendes (13,14) der Kopfstütze (3) bildet.

6. Autokindersitz nach Anspruch 4 oder 5,
dadurch gekennzeichnet,
dass die Schwenkachse (16) des Klemmschenkels (17) im unteren Bereich einer Vorderkante eines Seitenendes (13,14) der Kopfstütze (3) positioniert ist.

7. Autokindersitz nach einem oder mehreren der vorhergehenden Ansprüche,
dadurch gekennzeichnet,
dass der Klemmschenkel (17) an seinem der Schwenkachse (16) gegenüberliegenden Ende mit einer über seine Auflageseite hinausstehenden Erhöhung versehen ist.

8. Autokindersitz nach einem oder mehreren der vorhergehenden Ansprüche,
dadurch gekennzeichnet,
- dass ein zwischen den zur Sitzvorderseite hin ausgekehlten Armlehnen (28,29) einliegendes Prallkissen (24) mit einer horizontalen, sich über seine Breite erstreckenden und ebenfalls nach vorne offenen Auskehlung (53) zur Einlage eines Gurtes des Rückhaltesystems versehen ist und
- dass die Auskehlungen (33,53) von Sitzteil (1) und Prallkissen (24) etwa miteinander fluchten.

9. Autokindersitz nach Anspruch 8,
dadurch gekennzeichnet,
dass das Prallkissen (24) zu seiner Abhebesicherung die Armlehnen (28,29) untergreift.

10. Autokindersitz nach Anspruch 8 oder 9,
dadurch gekennzeichnet,
dass das Prallkissen (24) mit den Unterkanten (16) seiner Seitenenden auf den Seitenkanten (30) des Sitzteils (1) aufsitzt.

11. Autokindersitz nach Anspruch 9 oder 10,
dadurch gekennzeichnet,
dass das Prallkissen (24) mit seinen Seitenenden schwalbenschwanzartig zwischen den Armlehnen (28,29) und den Seitenkanten (30) des Sitzteils (1) geführt ist.

12. Autokindersitz nach einem oder mehreren der vorhergehenden Ansprüche,
dadurch gekennzeichnet,
dass das Prallkissen (24) in Sitztiefenrichtung verschiebbar am Sitzteil (1) geführt ist.

13. Autokindersitz nach einem oder mehreren der vorhergehenden Ansprüche,
dadurch gekennzeichnet,
dass das Tragteil des Prallkissens (24) ein formgeblasenes Kunststoffteil ist.

14. Autokindersitz nach einem oder mehreren der vorhergehenden Ansprüche,
dadurch gekennzeichnet,
dass die Unterkanten (36) der Seitenenden des Prallkissens (24) höhenverstellbar sind.

15. Autokindersitz nach Anspruch 14,
gekennzeichnet durch
einen als Höhenverstelleinrichtung wirksamen, U-förmigen Bügel (9) mit zu den Unterkanten der Seitenenden (13,14) des Prallkissens (24) etwa parallelem U-Joch (40) als Auflagekante und mit in Steckhülsen (44) des Prallkissens (24) längsverschiebbaren U-Schenkeln (41,42), wobei diese in unterschiedlichen Verschiebestellungen mittels eines Federrastgesperres (43) innerhalb einer Steckhülse (44) verrastbar sind.

16. Autokindersitz nach einem der Ansprüche 1 bis 14,
gekennzeichnet durch
zu den Unterkanten (36) der Seitenenden des Prallkissens (24) etwa parallele und mit ihnen oder miteinander verschnappbare Distanzteile (44) als Höhenverstelleinrichtung.

## Claims

1. Child's car seat for fixing on a motor vehicle seat by means of a vehicle's own restraint system which contains a diagonal belt
- having a seat frame with a seat part (1), back part (2) and with armrests (26, 28) which flank the seat part (1), and
- having a head restraint (3) which is guided in a height-adjustable manner in the back part (2) and having a guide (15) which is arranged on the head restraint (3) laterally above the seat part (1) and is intended for the diagonal belt (20),
characterized in that on at least one side end (13, 14) of the head restraint (3) the belt guide (15) for the diagonal belt (20) contains a clamping device which does away with the relative displaceability of the belt (20) and has a clamping leg (17) which can be pivoted from its clamping position into an open position, in which it forms a support for the diagonal belt (20).

2. Child's car seat according to Claim 1, characterized in that the head restraint (3) extends with its side ends (13, 14) into the side regions above the back part (2) and on the side ends (13, 14) carries the clamping device.

3. Child's car seat according to Claim 2, characterized in that the side ends (13, 14) of the head restraint (3) are situated as side boundaries, pointing towards the seat front side somewhat like the wings of a wing chair, in front of the active surface of the head part (12) of the head restraint (3), this active surface serving as the resting surface for the back of the child's head.

4. Child's car seat according to one of Claims 1 to 3, characterized in that the clamping leg (17) is arranged on the side boundaries of the head restraint (3) in a manner such that it can pivot about an approximately horizontal axis (16).

5. Child's car seat according to Claim 4, characterized in that the clamping leg (17) forms the front edge of a side end (13, 14) of the head restraint (3).

6. Child's car seat according to Claim 4 or 5, characterized in that the pivot axis (16) of the clamping leg (17) is positioned in the lower region of a front edge of a side end (13, 14) of the head restraint (3).

7. Child's car seat according to one or more of the preceding claims, characterized in that at its end opposite the pivot axis (16) the clamping leg (17) is provided with a raised part protruding above its support side.

8. Child's car seat according to one or more of the preceding claims, characterized
- in that an impact cushion (24) which is enclosed between the armrests (28, 29), which are hollowed out towards the seat front side, is provided with a horizontal hollowed-out portion (53), which extends over the width thereof and is likewise open forwards, for the insertion of a belt of the restraint system, and
- in that the hollowed-out portions (33, 53) of the seat part (1) and impact cushion (24) are approximately in alignment with each other.

9. Child's car seat according to Claim 8, characterized in that the impact cushion (24) grips below the armrests (28, 29) to secure it against being lifted off.

10. Child's car seat according to Claim 8 or 9, characterized in that the impact cushion (24) sits with the lower edges (16) of its side ends on the side edges (30) of the seat part (1).

11. Child's car seat according to Claim 9 or 10, characterized in that the impact cushion (24) is guided by its side ends in a dovetail-like manner between the armrests (28, 29) and the side edges (30) of the seat part (1).

12. Child's car seat according to one or more of the preceding claims, characterized in that the impact cushion (24) is guided on the seat part (1) in a manner such that it can be displaced in the direction of the seat depth.

13. Child's car seat according to one or more of the preceding claims, characterized in that the carrying part of the impact cushion (24) is a blow-moulded plastic part.

14. Child's car seat according to one or more of the preceding claims, characterized in that the lower edges (36) of the side ends of the impact cushion (24) are height-adjustable.

15. Child's car seat according to Claim 14, characterized by a U-shaped bracket (9) which is effective as a height-adjusting device and has a U-yoke (40), which is approximately parallel to the lower edges of the side ends (13, 14) of the impact cushion (24), as the supporting edge, and has U-legs (41, 42) which can be displaced longitudinally in plug-in sleeves (44) of the impact cushion (24), it being possible for the said U-legs to be latched in different displacement positions within a plug-in sleeve (44) by means of a spring-latching mechanism (43).

16. Child's car seat according to one of Claims 1 to 14, characterized by spacer parts (44), which are approximately parallel to the lower edges (36) of the side ends of the impact cushion (24) and can be snap-fitted to them, or to one another, as the height-adjusting device.

## Revendications

1. Siège d'enfant pour véhicule destiné à être fixé sur le siège d'un véhicule au moyen d'un système de retenue propre au véhicule et comprenant une ceinture diagonale, comportant :
- un châssis d'assise avec une partie d'assise (1), une partie de dossier (2) et des accoudoirs (26, 28) qui flanquent la partie d'assise (1), et
- un appuie-tête (3) guidé avec réglage en hauteur dans la partie de dossier (2) et un guidage (15), agencé au niveau de l'appuie-tête (3) latéralement au-dessus de la partie d'assise (1), pour la ceinture diagonale (20),
caractérisé en ce que le guidage de ceinture (15) pour la ceinture diagonale (20) comprend sur au moins une extrémité latérale (13, 14) de l'appuie-tête (3) un dispositif de coincement qui annule la mobilité relative de la ceinture (20), avec un bras de coincement (17) susceptible d'être pivoté hors de sa position de coincement jusque dans une position d'ouverture formant un appui pour la ceinture diagonale (20).

2. Siège d'enfants pour véhicule selon la revendication 1,
caractérisé en ce que l'appuie-tête (3) s'étend par ses extrémités latérales (13, 14) jusqu'à l'intérieur des régions latérales au-dessus de la partie de dossier (2), et porte le dispositif de coincement au niveau des extrémités latérales (13, 14).

3. Siège d'enfants pour véhicule selon la revendication 2,
caractérisé en ce que les extrémités latérales (13, 14) de l'appuie-tête sont disposées à titre de limitations latérales en direction de la face avant du siège à la manière des oreillettes d'un fauteuil à oreillettes en avant de la surface active de la partie de tête (12) de l'appuie-tête (3) qui sert de surface d'appui pour l'occiput de l'enfant.

4. Siège d'enfants pour véhicule selon l'une des revendications 1 à 3,
caractérisé en ce que le bras de coincement (17) est agencé sur les limitation latérales de l'appuie-tête (3) avec faculté de pivoter autour d'un axe approximativement horizontal (16).

5. Siège d'enfants pour véhicule selon la revendication 4,
caractérisé en ce que le bras de coincement (17) forme l'arête antérieure d'une extrémité latérale (13, 14) de l'appuie-tête (3).

6. Siège d'enfants pour véhicule selon l'une ou l'autre des revendications 4 et 5,
caractérisé en ce que l'axe de pivotement (16) du bras de coincement (17) est positionné dans la région inférieure d'une arête antérieure d'une extrémité latérale (13, 14) de l'appuie tête (3).

7. Siège d'enfants pour véhicule selon l'une ou plusieurs des revendications précédentes,
caractérisé en ce que le bras de coincement (17) est pourvu d'une surélévation qui dépasse au-delà de son côté d'appui, au niveau de son extrémité opposée à l'axe de pivotement (16).

8. Siège d'enfants pour véhicule selon l'une ou plusieurs des revendications précédentes,
caractérisé en ce que :
- un coussin à impact (24) disposé entre les accoudoirs (28, 29), qui présentent un creux en direction de la face avant du siège, est pourvu d'un creux (53) horizontal, lequel s'étend sur sa largeur et est également ouvert vers l'avant, pour la mise en place d'une ceinture du système de retenue ; et
- les creux (33, 53) de la partie d'assise (1) et du coussin à impact (24) sont approximativement en alignement mutuel.

9. Siège d'enfants pour automobiles selon la revendication 8,
caractérisé en ce que le coussin à impact (24) engage les accoudoirs (28, 29) par-dessous en vue d'empêcher son soulèvement.

10. Siège d'enfants pour automobiles selon l'une ou l'autre des revendications 8 et 9,
caractérisé en ce que le coussin à impact (24) repose par les arêtes inférieures (16) de ses extrémités latérales sur les arêtes latérales (30) de la partie d'assise (1).

11. Siège d'enfants pour automobiles selon l'une ou l'autre des revendications 9 et 10,
caractérisé en ce que le coussin à impact (24) est guidé par ses extrémités latérales à la manière de queue-d'aronde entre les accoudoirs (28, 29) et les arête latérales (30) de la partie d'assise (1).

12. Siège d'enfants pour automobiles selon l'une ou plusieurs des revendications précédentes,
caractérisé en ce que le coussin à impact (24) est guidé de façon mobile sur la partie d'assise (1) dans la direction de la profondeur du siège.

13. Siège d'enfants pour automobiles selon l'une ou plusieurs des revendications précédentes,
caractérisé en ce que la partie portante du coussin à impact (24) est une partie en matière plastique moulée par soufflage.

14. Siège d'enfants pour automobiles selon l'une ou plusieurs des revendications précédentes,
caractérisé en ce que les arêtes inférieures (36) des extrémités latérales du coussin à impact (24) sont réglables en hauteur.

15. Siège d'enfants pour automobiles selon la revendication 14,
caractérisé par un étrier en forme de U (9) s'agissant à titre de dispositif de réglage en hauteur, comprenant une crosse en U (40), approximativement parallèle aux arêtes inférieures des extrémités latérales (13, 14) du coussin à impact (24) à titre d'arêtes d'appui, et comprenant des bras (41, 42) susceptibles d'être déplacés en translation longitudinale dans des douilles à enfichage (44) du coussin à impact (24), lesdits bras étant susceptibles d'être enclenchés dans différentes positions en translation au moyen d'un blocage d'enclenchement à ressort (43) à l'intérieur d'une douille à enfichage (44).

16. Siège d'enfants pour automobiles selon l'une des revendications 1 à 14,
caractérisé par des pièces d'espacement (44), à titre de dispositif de réglage en hauteur, approximativement parallèles aux arêtes inférieures (36) des extrémités latérales du coussin à impact (24), et susceptibles d'être encliquetées avec celles-ci, ou bien les unes avec les autres.
